# EUROPÄISCHE PATENTSCHRIFT

(11) **EP 0 683 873 B1**
(45) Veröffentlichungstag und Bekanntmachung des Hinweises auf die Patenterteilung: **23.04.1997**
(21) Anmeldenummer: 94908306.7
(22) Anmeldetag: 15.02.1994
(51) Int. Cl.: F16H 3/095, F16H 57/02

(54) **ZAHNRÄDERWECHSELGETRIEBE**
TOOTHED-WHEEL GEARCHANGE
BOITE DE VITESSES A ENGRENAGES

(30) Priorität: 19.02.1993 DE 4305103
(43) Veröffentlichungstag der Anmeldung: 29.11.1995
(73) Patentinhaber: ZF FRIEDRICHSHAFEN Aktiengesellschaft, 88038 Friedrichshafen (DE)
(72) Erfinder: BURI, Gerhard, D-88048 Friedrichshafen (DE); BADER, Josef, D-88045 Friedrichshafen (DE)
(86) Internationale Anmeldenummer: EP9400425
(87) Internationale Veröffentlichungsnummer: WO9419623

(56) Entgegenhaltungen:
- EP-A- 0 043 443
- EP-A- 0 390 368
- US-A- 4 192 196

## Beschreibung

Die Erfindung betrifft ein Zahnräderwechselgetriebe mit Leistungsteilung auf mehrere Vorgelegewellen, mit einer koaxialen Antriebswelle, die radial und axial gelagert ist, und mit einer Abtriebswelle (Hauptwelle), die schwimmend gelagert ist, wobei mindestens ein auf der Antriebswelle vorgesehenes Antriebszahnrad das Drehmoment auf mit diesem kämmende und fest mit den Vorgelegewellen verbundene Zahnräder weiterleitet, wobei die Losräder auf der Antriebs- und Abtriebswelle axial fixiert, radial jedoch frei, sind.

Bei Getrieben dieser Art mit wenigstens zwei Vorgelegewellen wird der Lastausgleich im allgemeinen so gestaltet, daß die Antriebswelle und die Vorgelegewellen starr zum Gehäuse gelagert werden, während die Hauptwelle bzw. Abtriebswelle schwimmend in den auf ihr angeordneten Summenrädern, die sich im Kraftfluß befinden, gelagert wird.

Ein derartiges Getriebe ist beispielsweise aus der EP 0 043 443 A2 bekannt. Es weist eine Leistungsteilung auf mehrere Vorgelegewellen und eine radial und axial gelagerte Antriebswelle auf. Ein auf der Antriebswelle vorgesehenes Antriebszahnrad leitet das Drehmoment auf mit diesem kämmende und fest mit den Vorgelegewellen verbundene Zahnräder weiter. Von diesen Zahnrädern wird das Drehmoment auf auf der Abtriebswelle axial fixiert und radial frei beweglich angegeordnete Losräder und, mittels einer jeweils zugeordneten Kupplungseinrichtung, auf die Abtriebswelle weitergeleitet. Die Abtriebswelle ist koaxial zur Antriebswelle schwimmend gelagert.

Bei zwei oder mehr Konstanten tritt nun das Problem auf, daß bei mehreren Antriebsrädern das nicht geschaltete Antriebsrad durch Fertigungstoleranzen Radialspiel benötigt. Bei Abnahme eines Drehmomentes an einer Vorgelegewelle entstehen an einem schrägverzahnten Zahneingriff an der Antriebswelle radiale und axiale Kräfte. Um diese aufnehmen zu können, muß das in Kraftfluß befindliche Zahnrad zur Antriebswelle geführt werden.

Vorgelegewellengetriebe sind im allgemeinen so ausgeführt, daß die Antriebswelle radial und axial fest geführt ist, während die Hauptwelle bzw. Abtriebswelle wegen des erforderlichen Lastausgleichs radial frei und nur axial fixiert ist. Grundsätzlich ist jedoch auch die umgekehrte Ausbildung bzw. Wellenführung möglich.

Alle Losräder auf der Antriebswelle und auf der Abtriebswelle sind nur axial fixiert, radial jedoch frei für einen funktionierenden Lastausgleich.

Der notwendige Lastausgleich wird jedoch gestört bzw. eine Funktion des Zahnräderwechselgetriebes ist überhaupt nicht möglich, wenn ein asymmetrischer Kraftangriff auftritt. Dies ist z. B. dann der Fall, wenn ein Nebenabtrieb über nur eine Vorgelegewelle erfolgen soll. Dies bedeutete, daß ein Zahnräderwechselgetriebe der eingangs erwähnten Art für eine derartige Funktion nicht geeignet war.

Der vorliegenden Erfindung liegt daher die Aufgabe zugrunde, ein Zahnräderwechselgetriebe der eingangs erwähnten Art zu schaffen, das auch einen asymmetrischen Kraftangriff erlaubt, insbesondere bei dem auch ein Nebenabtrieb über nur eine Vorgelegewelle erfolgen kann.

Diese Aufgabe wird durch die Erfindung mit den Merkmalen des Anspruchs 1 gelöst. Weitere Ausgestaltungen der Erfindung sind in den Unteransprüchen enthalten.

Durch die radiale Festsetzung bzw. Zentrierung des auf der Antriebswelle angeordneten Antriebszahnrades ist ein asymmetrischer Kraftangriff bzw. ein einseitiger Abtrieb über eine Vorgelegewelle möglich, ohne daß die Funktionsfähigkeit des Zahnräderwechselgetriebes beeinträchtigt wird.

In vorteilhafter Weise wird man die Fixiereinrichtung mit der Schalteinrichtung für das Antriebszahnrad kuppeln.

Auf diese Weise erhält man eine schaltbare Radialfixierung, womit zwei Schaltstellungen möglich sind. Im allgemeinen sind wenigstens zwei Antriebsräder vorhanden, wobei für eine Funktionsfähigkeit stets nur das Antriebszahnrad, das geschaltet wird, radial fixiert werden soll. Das jeweils andere Antriebszahnrad soll radial frei sein.

Die Anzahl der schaltbaren Fixierungen ist jedoch grundsätzlich nicht begrenzt.

Eine einfache, konstruktive Ausgestaltung einer Fixiereinrichtung kann darin bestehen, daß zur Koppelung eine Rampe an der Schiebemuffe der Schalteinrichtung oder an der Fixiereinrichtung vorgesehen ist.

Eine einfache, konstruktive Ausgestaltung der Fixiereinrichtung bzw. der Rampe kann darin bestehen, daß die Rampe als Durchmesserreduzierung des Antriebszahnrades ausgebildet ist, unter die zur axialen Fixierung eine axiale Verlängerung der Schiebemuffe schiebbar ist.

Durch diese Ausgestaltung wird bei der Kupplung bzw. bei der Drehmomentverbindung des Antriebszahnrades mit der Antriebswelle gleichzeitig dessen radiale Fixierung vorgenommen.

Um eine einwandfreie Drehmomentübertragung und ein Kippen des Antriebszahnrades zu vermeiden, kann vorgesehen sein, daß sich die Durchmesserreduzierung axial bis über die Mitte des Zahneingriffes erstreckt.

Eine sehr vorteilhafte Weiterbildung der Erfindung besteht darin, daß die Fixiereinrichtung gleichzeitig die Drehmomentübertragungseinrichtung bildet.

Die Drehmomentübertragung von der Antriebswelle auf die Vorgelegewelle erfolgt in bekannter Weise über eine Koppelverzahnung zwischen der Schiebemuffe und der Antriebswelle. Erfindungsgemäß wird nun diese Verzahnung gleichzeitig auch zur Zentrierung bzw. radialen Fixierung der Antriebswelle verwendet.

In einer konstruktiven Ausgestaltung kann dies beispielsweise dadurch erfolgen, daß die Fixiereinrichtung bzw. die Drehmomentübertragungseinrichtung im Bereich des Innenumfangsringes des Antriebszahnrades angeordnet ist.

In diesem Falle wird praktisch die Rampe in Form einer Durchmesserreduzierung des inneren Umfangsringes des Antriebszahnrades oder einer entsprechenden Durchmessererhöhung der auf der Schiebemuffe angeordneten Verzahnung erreicht.

In vorteilhafter Weise wird man dabei die Fixiereinrichtung bzw. die Drehmomentübertragungseinrichtung im Bereich der axialen Mitte des Zahneingriffes anordnen, womit eine einwandfreie Zentrierung gegeben ist und Kippmomente vermieden werden.

In einer vorteilhaften Weiterbildung der Erfindung kann vorgesehen sein, daß die Schaltverzahnung mit beiderseits sich konisch verjüngenden Zahnflanken versehen ist.

Durch diese Ausgestaltung wird die axiale Fixierung des Antriebszahnrades unter Drehmomentbelastung unterstützt. In der Praxis haben sich Verjüngungswinkel größer 3° als besonders vorteilhaft herausgestellt.

Die Kupplungsverzahnung zwischen Antriebswelle und Schiebemuffe kann in unterschiedliche Bereiche aufgeteilt ist. Diese unterschiedlichen Bereiche weisen jeweils verschiedene Zahnweiten auf. Vorzugsweise sind zwei verschiedene Zahnweiten vorgesehen. Diese befinden sich bevorzugt auf der Antriebswelle. Die unterschiedlichen Bereiche mit verschiedenen Zahnweiten verhindern das selbständige Ausschalten der Schiebemuffe aus der jeweils gewählten Schaltposition.

Die Fixiereinrichtung kann in beide axiale Richtungen verschiebbar sein bzw. mit zwei Antriebsrädern zusammenarbeiten.

Nachfolgend sind zwei Ausführungsbeispiele der Erfindung anhand der Zeichnung prinzipmäßig beschrieben.

Es zeigt:

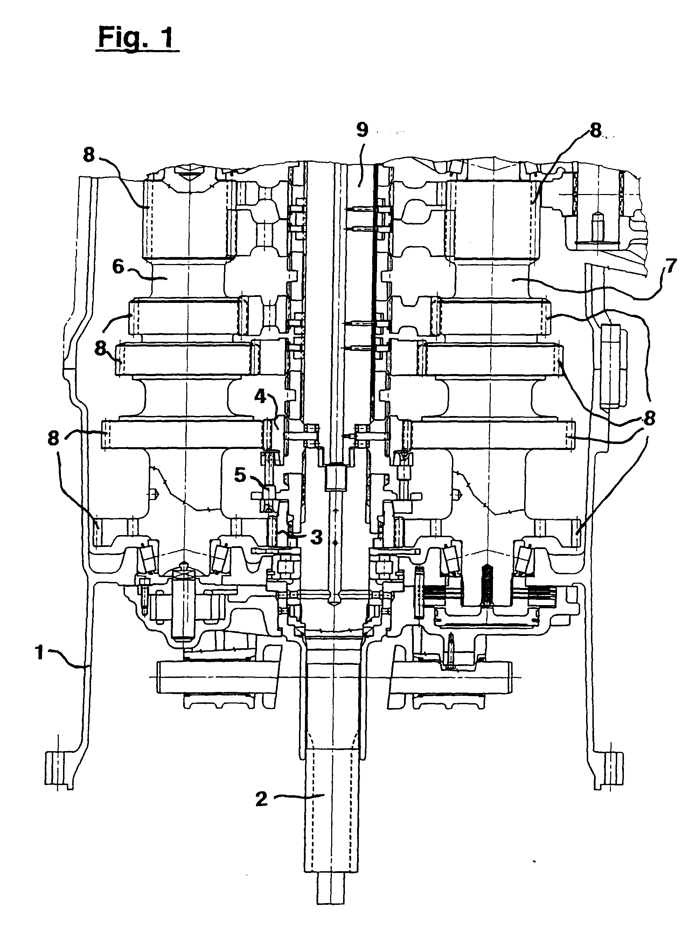

- Fig. 1: eine Gesamtansicht eines Zahnräderwechselgetriebes;
- Fig. 2: eine Ausschnittsvergrößerung des Bereiches mit den Antriebszahnrädern und der erfindungsgemäßen Fixiereinrichtung;
- Fig. 3: eine Ausschnittsvergrößerung der ungeschalteten Antriebszahnräder mit einer Fixiereinrichtung anderer Bauart;
- Fig. 4: eine Vergrößerung nach Fig. 3, geschaltet;
- Fig. 5: eine vergrößerte Draufsicht in Prinzipdarstellung auf die Zahnräder der Fixiereinrichtung und
- Fig. 6: eine Ausführungsform der Schiebemuffe.

Das Zahnräderwechselgetriebe ist grundsätzlich von bekannter Bauart und von bekannter Funktionsweise, weshalb nachfolgend nur auf die für die Erfindung wesentlichen Teile näher eingegangen wird.

Eine in einem Gehäuse 1 gelagerte Antriebswelle 2 ist mit zwei Antriebsrädern 3 und 4 über eine Schalteinrichtung 5 für eine Drehmomentübertragung verbindbar. Die Antriebsräder 3 und 4 stehen in Zahneingriff mit fest mit Vorgelegewellen 6 und 7 verbundenen Zahnrädern 8.

In bekannter Weise ist ein Teil der Zahnräder 8 mit auf einer Abtriebswelle 9 angeordneten Losrädern 10 in Zahneingriff. Die Abtriebswelle bzw. Hauptwelle 9 ist schwimmend gelagert.

Um einen hier nicht gezeigten Nebenabtrieb an der Vorgelegewelle 6 und die damit verbundene, einseitige Lastabnahme an der Vorgelegewelle 6 zu ermöglichen, ist eine Fixiereinrichtung für eine radiale Fixierung des geschalteten Antriebszahnrades vorgesehen. Im Normalfall sind nämlich beide Antriebszahnräder 3 und 4 mit radialem Spiel auf bzw. über der Antriebswelle 2 angeordnet.

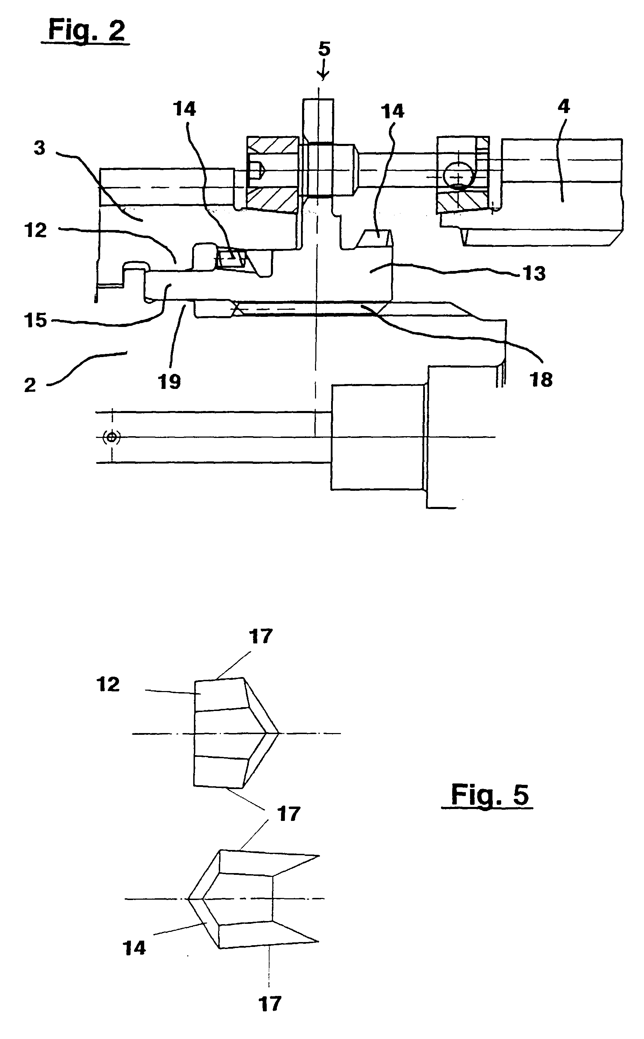

Gemäß Ausführungsbeispiel nach der Fig. 2 besitzt das Antriebszahnrad 3 an seinem inneren Umfangsring eine Durchmesserreduzierung in Form einer Rampe 12. Die Durchmesserreduzierung bzw. Rampe 12 erstreckt sich von der der Schiebemuffe 13 der Schalteinrichtung zugewandten Seite des Antriebszahnrades 3 bis zur Mitte bzw. etwas über die Mitte des Antriebszahnrades 3 hinaus. Die Schiebemuffe 13 ist spielarm auf der Antriebswelle 2 geführt und durch eine Verzahnung 18 mit dieser verbunden. Der der Rampe 12 des Antriebszahnrades 3 gegenüberliegende Bereich 19 der Antriebswelle 2 ist ebenfalls rampenförmig ausgebildet.

Die Schalteinrichtung 5 ist in bekannter Weise mit einer Koppelungs- bzw. Schaltverzahnung bzw. Drehmomentübertragungseinrichtung 14 für jedes der beiden Antriebszahnräder 3 und 4 versehen. Die Schiebemuffe 13 ist mit einer axialen Verlängerung 15 versehen. Die axiale Verlängerung 15 ragt mit Spiel unter das Antriebszahnrad 3, wobei dessen vorderes Ende in Neutralstellung, d. h. im nicht geschalteten Zustand, vor den Rampen 12 und 19 endet.

Wird nun in üblicher Weise die Schalteinrichtung 5 über die hier nicht gezeigte Schaltgabel in axialer Richtung verschoben, z. B. nach links, so schiebt sich die axiale Verlängerung 15 der Schiebemuffe 13 zwischen die Rampe 12 des Antriebszahnrades 3 und die Rampe 19 der Welle 2. Die Durchmesserverhältnisse zwischen dem Außendurchmesser der axialen Verlängerung 15 und dem Innendurchmesser der Rampe 12 sowie dem Innendurchmesser der Verlängerung 15 und dem Außendurchmesser der Rampe 19 sind dabei so gewählt, daß die axiale Verlängerung 15 spielfrei zwischen den Rampen 12 und 19 eingeschoben wird. Auf diese Weise wird während des Schaltvorganges der Schalteinrichtung 5 und der damit verbundenen Ankoppelung des Antriebszahnrades 3 gleichzeitig das Antriebszahnrad 3 auch radial geführt. Das Antriebszahnrad 3 wird über die Rampe 12, 15 zur Schiebemuffe 13 zentriert bzw. fixiert und diese wird über die Rampe 15, 19 zur Antriebswelle 2 zentriert bzw. fixiert.

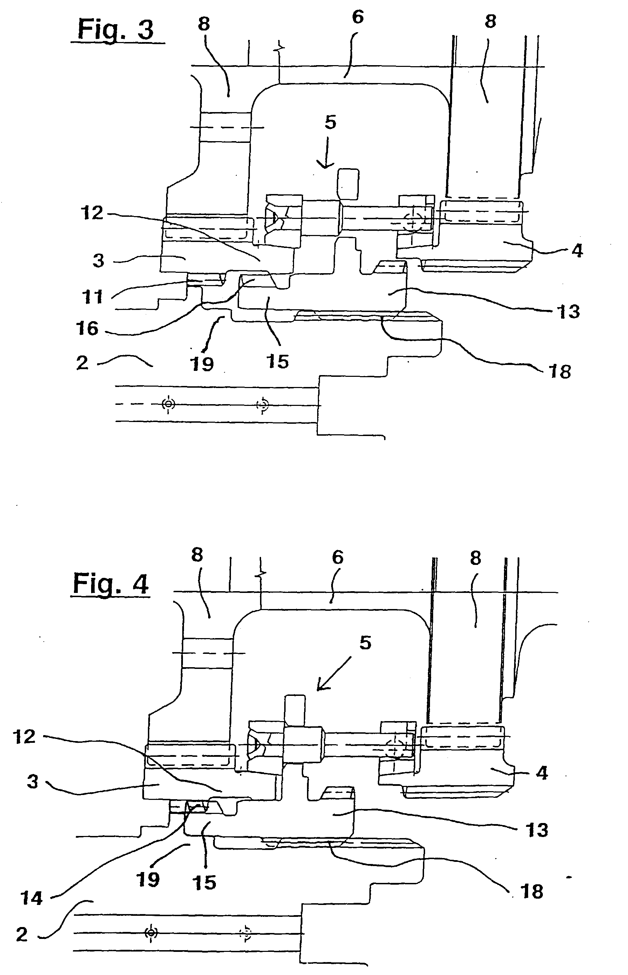

In den Fig. 3 und 4 ist ein weiteres Ausführungsbeispiel für eine Fixiereinrichtung dargestellt. Grundsätzlich ist sie jedoch von gleichem Aufbau wie die vorstehend beschriebene Fixiereinrichtung. Der wesentliche Unterschied dazu besteht darin, daß dabei die Fixiereinrichtung gleichzeitig die Drehmomentübertragungseinrichtung bildet bzw. daß beide Einrichtungen zu einer Einheit verbunden sind.

Wie insbesondere aus der Fig. 3 ersichtlich ist, besitzt das Antriebszahnrad 3 an seinem inneren Umfangsring ebenfalls eine Durchmesserreduzierung in Form einer Rampe 12. Gleichermaßen weist die Welle 2 eine Rampe 19 auf. Zwischen diesen Rampen 12 und 19 ist wiederum die Schiebemuffe 13 mit einer entsprechenden Verlängerung bzw. aufgrund ihrer speziellen Ausgestaltung einschiebbar. Im Unterschied zu dem Ausführungsbeispiel nach der Fig. 2 ist jedoch im Bereich der Rampe 12 gleichzeitig auch die Drehmomentübertragungseinrichtung in Form der an sich bekannten Schaltverzahnung vorgesehen.

Hierzu weist die Rampe 12 einen entsprechenden Zahnring 11 auf und die Schiebemuffe 13 einen entsprechenden Zahnkranz 16 an ihrem Außenumfang.

In Fig. 3 ist zunächst die Position der Schalteinrichtung im ungeschalteten Zustand eines Antriebsrades gezeigt, während das in der Fig. 4 dargestellte Ausführungsbeispiel die Position im geschalteten Zustand des Antriebsrades 3 zeigt, wobei - wie ersichtlich - die radiale Zentrierung des Antriebszahnrades und die Drehmomentverbindung hergestellt ist. Hierzu sind die Durchmesserverhältnisse der verzahnten Rampe 12 der Schiebemuffe 13 in dem Bereich, in dem sie in die Rampe 12 eingreift, und die Schaltverzahnungsteile Zahnring 11 und Zahnkranz 16 entsprechend aneinander angepaßt, so daß kein radiales Spiel zwischen den genannten Teilen vorhanden ist.

In der Anordnung nach Fig. 3 und Fig. 4 kann die radiale Fixierung auf je zwei Punkte aufgeteilt sein, wobei zum einen die Profildurchmesser der Schaltverzahnung 14, 11, 16 und der Verzahnung 18 und zum anderen die Rampen 12, 15 und 15, 19 die Zentrierung übernehmen.

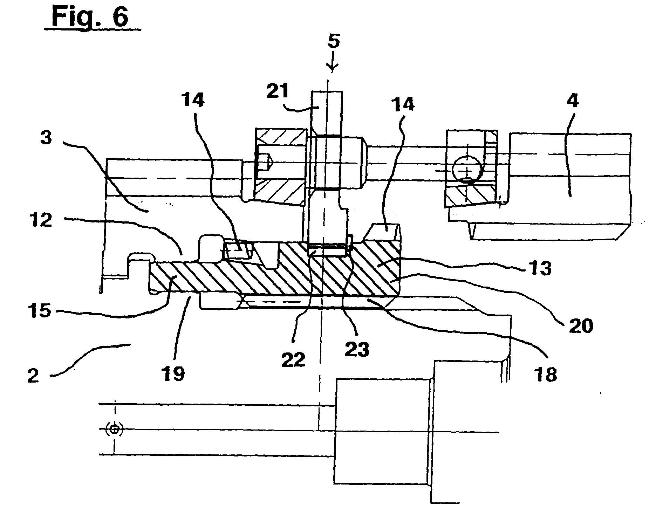

Wie aus der Fig. 5 ersichtlich ist, sind die Zahnflanken 17 der Zähne der Schaltverzahnung 14 und der verzahnten Rampe 12 beidseitig konisch verjüngt. Durch diese konische Schaltverzahnung wird die axiale Verschiebung und das Eingreifen der Schiebemuffe unter Drehmomentbelastung unterstützt. Der Konuswinkel kann vorzugsweise 3,5° betragen.

Die Schiebemuffe 13 kann auch so ausgestaltet sein, daß sie beidseitig Verlängerungen 15 aufweist, die mit Rampen 12 sowohl in einem Antriebszahnrad 3 als auch in einem Antriebszahnrad 4 korrespondieren. Entsprechende Rampen 19 sind dann auch auf der Welle 2 im Bereich der Antriebszahnräder vorhanden.

Eine weitere vorteilhafte Ausgestaltung der Schiebemuffe 13 zeigt die Fig. 6.

Dabei ist die Schiebemuffe 13 in zwei Teile aufgeteilt. Ein erster Teil 20 weist die Schaltverzahnung 14 zur Drehmomentübertragung und die axiale Verlängerung 15 zur Fixierung des Antriebszahnrades 3 auf. Der zweite Teil 21 ist mit dem ersten Teil 20 formschlüssig verbunden. Der zweite Teil 21 beinhaltet Teile einer bekannten und hier nicht näher beschriebenen Synchronisiereinrichtung. Der Formschluß zwischen den beiden Teilen 20 und 21 kann beispielsweise durch eine Verzahnung 22 erzielt werden. Axial zueinander können die beiden Teile 20 und 21 durch einen Sprengring gesichert sein, der in einem Einstich in Teil 21 angeordnet ist und in einen Einstich in Teil 20 eingreift. Der Teil 21 kann auch axial an einem Vorsprung des Teils 20 anliegen und durch einen Sprengring 23 axial gesichert sein, der auf der dem Vorsprung gegenüberliegenden Seite des Teils 21 in einen Einstich des Teils 20 eingreift.

## Patentansprüche

1. Zahnräderwechselgetriebe mit Leistungsverteilung auf mehrere Vorgelegewellen (6,7), mit einer radial und axial gelagerten Antriebswelle (2) und einer koaxialen und schwimmend gelagerten Abtriebswelle (Hauptwelle) (9), wobei mindestens ein auf der Antriebswelle vorgesehenes Antriebszahnrad (3) das Drehmoment auf mit diesem kämmende und fest mit den Vorgelegewellen verbundene Zahnräder (8) weiterleitet, von denen das Drehmoment auf auf der Abtriebswelle axial fixiert und radial frei beweglich angeordnete Losräder (10) und von dort mittels einer jeweils zugeordneten Kupplungseinrichtung auf die Abtriebswelle weitergeleitet wird, dadurch gekennzeichnet, daß das mindestens eine auf der Antriebswelle vorgesehene Antriebszahnrad (3) ein axial fixiertes und radial frei bewegliches Losrad (3) ist, das zur Drehmomentübertragung über eine Schalteinrichtung (5) mit der Antriebswelle (2) gekuppelt und über eine verschiebbare Fixiereinrichtung (12, 15, 19) radial festgelegt wird.

2. Zahnräderwechselgetriebe nach Anspruch 1, dadurch **gekennzeichnet**, daß die Fixiereinrichtung (12, 15, 19) mit der Schalteinrichtung (5) für das Antriebszahnrad (3) gekoppelt ist.

3. Zahnräderwechselgetriebe nach Anspruch 2, dadurch **gekennzeichnet**, daß eine Rampe (12, 19) an der Schiebemuffe (13) der Schalteinrichtung (5) oder an der Fixiereinrichtung (12, 15, 19) vorgesehen ist.

4. Zahnräderwechselgetriebe nach Anspruch 3, dadurch **gekennzeichnet**, daß die Schiebemuffe (13) der Schalteinrichtung (5) mit der Rampe (12) gekoppelt ist, die als Fixiereinrichtung (12, 15, 19) an dem Antriebszahnrad (3) angeordnet ist.

5. Zahnräderwechselgetriebe nach Anspruch 4, dadurch **gekennzeichnet**, daß die Rampe (12) als Durchmesserreduzierung des Antriebszahnrades (3) ausgebildet ist, unter die zur radialen Fixierung eine axiale Verlängerung (15) der Schiebemuffe (13) schiebbar ist.

6. Zahnräderwechselgetriebe nach Anspruch 5, dadurch **gekennzeichnet**, daß sich die Durchmesserreduzierung axial bis über die Mitte des Zahneingriffes erstreckt.

7. Zahnräderwechselgetriebe nach wenigstens einem der obigen Ansprüche, dadurch **gekennzeichnet**, daß die Fixiereinrichtung (12, 15, 19) gleichzeitig die Drehmomentübertragungseinrichtung (14) bildet.

8. Zahnräderwechselgetriebe nach Anspruch 7, dadurch **gekennzeichnet**, daß die Fixiereinrichtung (12, 15, 19) bzw. die Drehmomentübertragungseinrichtung (14) im Bereich des Innenumfangsringes des Antriebszahnrades (3) angeordnet ist.

9. Zahnräderwechselgetriebe nach Anspruch 8, dadurch **gekennzeichnet**, daß die Fixiereinrichtung (12, 15, 19) bzw. die Drehmomentübertragungseinrichtung (14) im Bereich der axialen Mitte des Zahnradeingriffes liegt.

10. Zahnräderwechselgetriebe nach einem der Ansprüche 7 bis 9, dadurch **gekennzeichnet**, daß die Drehmomentübertragungseinrichtung (14) mit beidseitig sich konisch verjüngenden Zahnflanken (17) versehen ist.

11. Zahnräderwechselgetriebe nach Anspruch 10, dadurch **gekennzeichnet**, daß der Verjüngungswinkel der Zahnflanken (17) größer 3° beträgt.

12. Zahnräderwechselgetriebe nach wenigstens einem der vorliegenden Ansprüche, dadurch **gekennzeichnet**, daß die Fixiereinrichtung (12, 15, 19) in beide axiale Richtungen verschiebbar ist bzw. mit dem Antriebszahnrad (3) und einem weiteren Antriebszahnrad (4) zusammenarbeitet.

13. Zahnräderwechselgetriebe nach wenigstens einem der vorherigen Ansprüche, dadurch **gekennzeichnet**, daß zwischen Antriebswelle (2) und Schiebemuffe (13) eine Kupplungsverzahnung (18) vorgesehen ist, die Bereiche mit unterschiedlichen Zahnweiten aufweist.

14. Zahnräderwechselgetriebe nach Anspruch 13, dadurch **gekennzeichnet**, daß die Bereiche mit unterschiedlichen Zahnweiten auf der Antriebswelle (2) angeordnet sind.

15. Zahnräderwechselgetriebe nach wenigstens einem der vorherigen Ansprüche 3 bis 14, dadurch **gekennzeichnet**, daß die Schiebemuffe (13) mehrteilig ist.

16. Zahnräderwechselgetriebe nach Anspruch 15, dadurch **gekennzeichnet**, daß ein Teil (20) der Schiebemuffe (13) die Fixiereinrichtung (12, 15, 19) und Drehmomentübertragungseinrichtung (14) aufweist und ein zweiter Teil (21) der Schiebemuffe (13) Elemente einer Synchronisiereinrichtung aufweist.

17. Zahnräderwechselgetriebe nach Anspruch 15 oder 16, dadurch **gekennzeichnet**, daß die Teile (20, 21) der Schiebemuffe (13) untereinander formschlüssig verbunden sind.

18. Zahnräderwechselgetriebe nach einem der Ansprüche 15 bis 17, dadurch **gekennzeichnet**, daß eine axiale Fixierung der Teile (20, 21) zueinander durch einen Sprengring (23) gesichert ist.

## Claims

1. Toothed-wheel gearchange with power distribution over several layshafts (6, 7) with a radially and axially mounted input shaft (2) and a coaxial output shaft (main shaft) (9) mounted in a floating manner, wherein at least one input toothed wheel (3) provided on the input shaft transmits the torque onto toothed wheels (8) which mesh with it, are rigidly connected to the layshafts and by which the torque is transmitted to loose wheels (10) axially fixed to the output shaft and arranged radially freely movably and from there by means of a respectively allocated clutch device onto the output shaft, characterised in that the input toothed wheel (3) of which there is at least one and which is provided on the input shaft is an axially fixed and radially freely movable loose wheel (3) which is coupled to the input shaft (2) for torque transmission via a shifting device (5) and is radially secured via a displaceable fixing device (12, 15, 19).

2. Toothed-wheel gearchange according to claim 1,
characterised in that the fixing device (12, 15, 19) is coupled to the shifting device (5) for the input toothed wheel (3).

3. Toothed-wheel gearchange according to claim 2,
characterised in that a ramp (12, 19) is provided on the sliding bush (13) of the shifting device (5) or on the fixing device (12, 15, 19).

4. Toothed-wheel gearchange according to claim 3,
characterised in that the sliding bush (13) of the shifting device (5) is coupled to the ramp (12) arranged as a fixing device (12, 15, 19) on the input toothed wheel (3).

5. Toothed-wheel gearchange according to claim 4,
characterised in that the ramp (12) is designed as a reduction in diameter of the input toothed wheel (3) beneath which an axial extension (15) of the sliding bush (13) can be slid for radial fixing.

6. Toothed-wheel gearchange according to claim 5,
characterised in that the reduction in diameter extends axially beyond the centre of tooth engagement.

7. Toothed-wheel gearchange according to at least one of the foregoing claims, characterised in that the fixing device (12, 15, 19) simultaneously forms the torque-transmitting device (14).

8. Toothed-wheel gearchange according to claim 7,
characterised in that the fixing device (12, 15, 19) or the torque-transmitting device (14) is arranged in the region of the internal peripheral ring of the input toothed wheel (3).

9. Toothed-wheel gearchange according to claim 8,
characterised in that the fixing device (12, 15, 19) or the torque-transmitting device (14) is located in the region of the axial centre of toothed-wheel engagement.

10. Toothed-wheel gearchange according to one of claims 7 to 9, characterised in that the torque-transmitting device (14) is provided with tooth flanks (17) which taper conically on either side.

11. Toothed-wheel gearchange according to claim 10,
characterised in that the taper angle of the tooth flanks (17) is greater than 3°.

12. Toothed-wheel gearchange according to at least one of the present claims, characterised in that the fixing device (12, 15, 19) is displaceable in both axial directions and cooperates with the input toothed wheel (3) and a further input toothed wheel (4).

13. Toothed-wheel gearchange according to at least one of the preceding claims, characterised in that clutch teeth (18) having regions with different tooth widths are provided between input shaft (2) and sliding bush (13).

14. Toothed-wheel gearchange according to claim 13,
characterised in that the regions with different tooth widths are arranged on the input shaft (2).

15. Toothed-wheel gearchange according to at least one of the preceding claims 3 to 14, characterised in that the sliding bush (13) is in several parts.

16. Toothed-wheel gearchange according to claim 15,
characterised in that one part (20) of the sliding bush (13) has the fixing device (12, 15, 19) and torque-transmitting device (14) and a second part (21) of the sliding bush (13) has elements of a synchronising device.

17. Toothed-wheel gearchange according to claim 15 or 16,
characterised in that the parts (20, 21) of the sliding bush (13) are connected to one another in an interlocking manner.

18. Toothed-wheel gearchange according to one of claims 15 to 17, characterised in that axial fixing of the parts (20, 21) relative to one another is secured by a snap ring (23).

## Revendications

1. Boîte de vitesses à engrenages avec répartition du couple sur plusieurs arbres décalés (6, 7), ayant un arbre d'entraînement (2) monté radialement et axialement sur des paliers et un arbre entraîné flottant (arbre principal) (9), dans laquelle au moins une des roues dentées d'entraînement (3) montée sur l'arbre d'entraînement, dérive le couple sur les roues dentées (8) rigidement liées aux arbres décalés et couplée à cet arbre d'entraînement, le couple étant transmis à l'arbre entraîné au moyen d'un dispositif d'embrayage approprié après avoir été transmis à des roues libres (10) fixes axialement et radialement libres montées sur l'arbre entraîné, **caractérisée en ce qu'**au moins une des roues dentées d'entraînement (3) prévues sur l'arbre d'entraînement est une roue libre (3) fixe axialement et libre radialement, en ce que, pour la transmission du couple, un couplage avec l'arbre d'entraînement (2) s'effectue au moyen d'un dispositif de commande (5) et d'un dispositif de fixation (12, 15, 19) coulissant radialement.

2. Boîte de vitesses selon la revendication 1, **caractérisée en ce que** le dispositif de fixation (12, 15, 19) est couplé au dispositif de commande (5) par la roue dentée d'entraînement (3).

3. Boîte de vitesses selon la revendication 2, **caractérisée en ce que** la douille coulissante (13) du dispositif de commande (5) ou du dispositif de fixation (12, 15, 19) comporte une rampe (12, 19).

4. Boîte de vitesses selon la revendication 3, **caractérisée en ce que** la douille coulissante (13) du dispositif de commande (5) est couplée avec la rampe (12) qui est montée comme dispositif de fixation (12, 15, 19) sur la roue dentée d'entraînement (3).

5. Boîte de vitesses selon la revendication 4, **caractérisée en ce que** la rampe (12) est formée par une réduction du diamètre de la roue dentée d'entraînement (3), sous laquelle est montée un prolongement axial (15) coulissant de la douille coulissante (13), en vue d'une fixation radiale.

6. Boîte de vitesses selon la revendication 5, **caractérisée en ce que** ladite réduction du diamètre s'étend axialement jusqu'à mi-profondeur des dents.

7. Boîte de vitesses selon au moins une des revendications précédentes, **caractérisée en ce que** le dispositif de fixation (12, 15, 19) constitue en même temps le dispositif de transmission du couple (14).

8. Boîte de vitesses selon la revendication 7, **caractérisée en ce que** le dispositif de fixation (12, 15, 19), respectivement le dispositif de transmission du couple (14) est disposé dans la zone de la bague périphérique intérieure de la zone dentée d'entraînement (3).

9. Boîte de vitesses selon la revendication 8, **caractérisée en ce que** le dispositif de fixation (12, 15, 19) respectivement le dispositif de transmission du couple (14) se situe dans la zone centrale médiane du creux entre les dents.

10. Boîte de vitesses selon l'une des revendications 7 à 9, **caractérisée en ce que** le dispositif de transmission du couple (14) est pourvu des deux côtés de flancs coniques convergents (17).

11. Boîte de vitesses selon la revendication 10, **caractérisée en ce que** l'angle de convergence des flancs des dents (17) est supérieur à 3°.

12. Boîte de vitesses selon au moins des revendications précédentes, **caractérisée en ce que** le dispositif de fixation (12, 15, 19) peut coulisser dans les deux directions axiales avec la roue dentée (3) d'entraînement, et coopère avec une autre roue dentée d'entraînement (4).

13. Boîte de vitesses selon au moins une des revendications précédentes, **caractérisée en ce que**, entre l'arbre d'entraînement (2) et la douille coulissante (13), est prévue une denture de couplage (18) qui comporte des secteurs ayant des écarts de dents variables.

14. Boîte de vitesses selon la revendication 13, **caractérisée en ce que** les secteurs où les dents ont des écarts variables sont ménagés sur l'arbre d'entraînement (2).

15. Boîte de vitesses selon au moins une des revendications précédentes 3 à 14, **caractérisée en ce que** la douille coulissante (13) est faite de plusieurs parties.

16. Boîte de vitesses selon la revendication 15, **caractérisée en ce qu'**une partie (20) de la douille coulissante (13) comporte le dispositif de fixation (12, 15, 19) et le dispositif de transmission de couple (14) et qu'une deuxième partie (21) de la douille coulissante (13) comporte des éléments d'un dispositif de synchronisation.

17. Boîte de vitesses selon les revendications 15 ou 16, **caractérisée en ce que** les parties (20, 21) de la douille coulissante (13) sont liées entre elles par couplage de forme.

18. Boîte de vitesses selon les revendications 15 à 17, **caractérisée en ce que** la fixation axiale relative des parties (20, 21) est assurée au moyen d'une bague fendue (23).
